(19) Europäisches Patentamt
European Patent Office
Office européen des brevets

(11) **EP 3 045 221 A1**

(12) **EUROPÄISCHE PATENTANMELDUNG**

(43) Veröffentlichungstag:
   **20.07.2016 Patentblatt 2016/29**

(51) Int Cl.:
   ***B01D 65/10*** *(2006.01)*   ***C25B 15/06*** *(2006.01)*
   ***C25B 1/12*** *(2006.01)*

(21) Anmeldenummer: **15151622.6**

(22) Anmeldetag: **19.01.2015**

(84) Benannte Vertragsstaaten:
   **AL AT BE BG CH CY CZ DE DK EE ES FI FR GB**
   **GR HR HU IE IS IT LI LT LU LV MC MK MT NL NO**
   **PL PT RO RS SE SI SK SM TR**
   Benannte Erstreckungsstaaten:
   **BA ME**

(71) Anmelder: **Siemens Aktiengesellschaft**
   **80333 München (DE)**

(72) Erfinder:
   • **Hanebuth, Marc**
     **90482 Nürnberg (DE)**
   • **Hertsch, Hagen**
     **91056 Erlangen (DE)**
   • **Sawinsky, Michael**
     **96155 Buttenheim (DE)**

(54) **Überprüfung einer Membrandichtheit wenigstens einer Membran eines Elektrolyseurs**

(57) Die Erfindung betrifft ein Verfahren zur Überprüfung einer Membrandichtheit wenigstens einer Membran (7) eines Elektrolyseurs (1), der zwei durch die wenigstens eine Membran (7) voneinander getrennte Elektrolyseurvolumina aufweist und zur Erzeugung zweier Produktgase (10, 30) aus einer Ausgangsflüssigkeit (50) mittels einer Elektrolyse ausgebildet ist, wobei ein Flüssigkeitsmengenstrom der Ausgangsflüssigkeit (50) zwischen den beiden Elektrolyseurvolumina ermittelt und zur Überprüfung der Membrandichtheit ausgewertet wird.

FIG 1

**Beschreibung**

Die Erfindung betrifft ein Verfahren und eine Prüfvorrichtung zur Überprüfung einer Membrandichtheit wenigstens einer Membran eines Elektrolyseurs, der zwei durch die wenigstens eine Membran voneinander getrennte Elektrolyseurvolumina aufweist und zur Erzeugung zweier Produktgase aus einer Ausgangsflüssigkeit mittels einer Elektrolyse ausgebildet ist.

Insbesondere betrifft die Erfindung die Überprüfung der Membrandichtheit eines Elektrolyseurs für eine Wasserelektrolyse, bei der Wasser in die Produktgase Sauerstoff und Wasserstoff zerlegt wird, wobei der Elektrolyseur beispielsweise als ein Protonen-Austausch-Membran-Elektrolyseur (so genannter PEM-Elektrolyseur) mit wenigstens einer protonendurchlässigen Polymermembran (PEM = polymer electrolyte membrane) ausgebildet ist. PEM-Elektrolyseure haben den Vorteil, dass sie sehr dynamisch betrieben werden können und somit hervorragend für die Verwendung von regenerativem Überschussstrom für die Produktion von Wasserstoff geeignet sind.

Bei der Elektrolyse von Wasser werden stets die beiden Produktgase Wasserstoff und Sauerstoff gleichzeitig gebildet. Diese Produktgase müssen zu jeder Zeit getrennt vorliegen und dürfen sich nicht vermischen. Membranen des Elektrolyseurs können im laufenden Betrieb Leckagen entwickeln, so dass eine hermetische Trennung der beiden Produktgase nicht mehr garantiert werden kann. In diesem Fall kann ein Vermischen der Produktgase eintreten, so dass im Extremfall ein unsicherer Betriebszustand eintreten kann. Dieser Fall muss durch geeignete Maßnahmen ausgeschlossen werden.

Leckagen von Membranen eines Elektrolyseurs können beispielsweise erkannt werden, indem geprüft wird, ob ein Produktgas eine Membran durchdringt. Dieses Vorgehen erfordert eine eigenständige Überwachung der Produktgase und ist relativ aufwändig. Herausfordernd im Fall eines Elektrolyseurs für eine Wasserelektrolyse ist insbesondere, dass Wasser im System vorhanden ist, so dass zusammen mit den beiden Produktgasen bis zu drei Komponenten gleichzeitig vorliegen können. Bei einer dynamischen Fahrweise, welche im Allgemeinen Temperatur- und Druckänderungen nach sich zieht, variiert der Wassergehalt mitunter stark. Dies erschwert gerade bei einfachen (robusten) Analysemethoden eine Kalibrierung. Außerdem können unerwünschte Kondensationseffekte eintreten.

Bei einer typischen technischen Umsetzung der Überwachung der Produktgase zur Erkennung von Membranleckagen wird ein geringer Gasstrom, der von einem Produktgas abgezweigt wird, analysiert. Mit Hilfe eines z.B. aktiv gekühlten Kondensators kann das abgezweigte Gas getrocknet werden. Zeitlich wechselnde Betriebsdrücke können durch einen Druckminderer vereinheitlicht werden. Als Detektoren kommen beispielsweise Gaschromatographen, Wärmeleitfähigkeitsdetektoren oder katalytische Sensoren in Frage. Letztgenannte verursachen bei Vorhandensein von Wasserstoff und Sauerstoff eine chemische Reaktion und registrieren daraufhin eine Temperaturerhöhung. Ein derartiges Vorgehen hat den Nachteil, dass zusätzliche Bauteile nötig sind, und dass relativ aufwändige Kalibrierungen durchgeführt werden müssen.

Der Erfindung liegt die Aufgabe zugrunde, ein verbessertes Verfahren und eine verbesserte Prüfvorrichtung zur Überprüfung einer Membrandichtheit wenigstens einer Membran eines Elektrolyseurs, der zwei durch die wenigstens eine Membran voneinander getrennte Elektrolyseurvolumina aufweist und zur Erzeugung zweier Produktgase aus einer Ausgangsflüssigkeit mittels einer Elektrolyse ausgebildet ist, anzugeben.

Die Aufgabe wird erfindungsgemäß hinsichtlich des Verfahrens durch die Merkmale des Anspruchs 1 und hinsichtlich der Prüfvorrichtung durch die Merkmale des Anspruchs 13 gelöst. Vorteilhafte Ausgestaltungen der Erfindung sind Gegenstand der Unteransprüche.

Bei dem erfindungsgemäßen Verfahren zur Überprüfung einer Membrandichtheit wenigstens einer Membran eines Elektrolyseurs, der zwei durch die wenigstens eine Membran voneinander getrennte Elektrolyseurvolumina aufweist und zur Erzeugung zweier Produktgase aus einer Ausgangsflüssigkeit mittels einer Elektrolyse ausgebildet ist, wird ein Flüssigkeitsmengenstrom der Ausgangsflüssigkeit zwischen den beiden Elektrolyseurvolumina ermittelt und zur Überprüfung der Membrandichtheit ausgewertet.

Das Verfahren sieht also vor, die Membrandichtheit eines Elektrolyseurs nicht anhand von Gasanalysen von Produktgasen, sondern stattdessen durch eine Analyse eines Flüssigkeitsmengenstroms der Ausgangsflüssigkeit durch die wenigstens eine Membran des Elektrolyseurs zu überwachen, der sich als Flüssigkeitsmengenstrom zwischen den beiden durch die wenigstens eine Membran getrennten Elektrolyseurvolumina manifestiert. Dem Verfahren liegt zugrunde, dass außer den Molekülen eines Produktgases auch an der Elektrolyse nicht beteiligte Moleküle der Ausgangsflüssigkeit die wenigstens eine Membran durchdringen und somit von einem Elektrolyseurvolumen in das andere Elektrolyseurvolumen gelangen. Bei einer Leckage einer Membran können mehr Moleküle der Ausgangsflüssigkeit diese Membran durchdringen, was eine Änderung des Flüssigkeitsmengenstroms zwischen den beiden Elektrolyseurvolumina zur Folge hat. Daher ermöglicht eine Ermittlung dieses Flüssigkeitsmengenstroms eine Überprüfung der Membrandichtheit.

Das Verfahren ermöglicht damit vorteilhaft eine Überprüfung der Membrandichtheit ohne eine aufwändige Gasanalyse und Kalibrierung. Insbesondere kann das Verfahren im Unterschied zu Gasanalyseverfahren ohne ein Abzweigen eines Gasstroms und ohne zusätzliche Detektoren zur Gasanalyse des abgezweigten Gasstroms wie Gaschromatographen, Wärmeleitfähigkeitsdetektoren oder katalytische Sensoren durchgeführt werden. Zur Durchführung des Verfahrens sind lediglich Sensoren zur Ermittlung des Flüssigkeitsmengenstroms zwischen den beiden Elektrolyseurvolumina, sowie in einer unten beschriebenen Ausgestaltung des Verfahrens Strommesser zur Erfassung von Elektrolysestromstärken erforderlich. Derartige Sensoren sind in der Regel ohnehin als Komponenten eines Elektrolyseurs vorgesehen, so dass keine zusätzlichen Sensoren zur Realisierung des erfindungsgemäßen Verfahrens benötigt werden. Außerdem ermöglicht das Verfahren eine zuverlässige Überprüfung der Membrandichtheit aufgrund der hohen Messgenauigkeit von Sensoren zur Ermittlung des Flüssigkeitsmengenstroms und Elektrolysestromstärke.

Eine Ausgestaltung der Erfindung sieht vor, dass zur Ermittlung des Flüssigkeitsmengenstroms eine zeitliche Änderung eines Flüssigkeitsvolumens der Ausgangsflüssigkeit in wenigstens einem der beiden Elektrolyseurvolumina ermittelt wird.

Eine zeitliche Änderung eines Flüssigkeitsvolumens der Ausgangsflüssigkeit in wenigstens einem der beiden Elektrolyseurvolumina ist messtechnisch einfach und präzise, beispielsweise mittels Füllstandsensoren, ermittelbar und eignet sich daher vorteilhaft zur Ermittlung des Flüssigkeitsmengenstroms zwischen den Elektrolyseurvolumina.

In der Regel umfasst jedes der beiden Elektrolyseurvolumina ein Behältervolumen eines Abscheidebehälters, in dem ein Produktgas und Ausgangsflüssigkeit gesammelt werden. In einem solchen Fall wird die zeitliche Änderung eines Flüssigkeitsvolumens der Ausgangsflüssigkeit in wenigstens einem der beiden Elektrolyseurvolumina vorzugsweise ermittelt, indem eine zeitliche Änderung eines Flüssigkeitsvolumens der Ausgangsflüssigkeit in dem Behältervolumen des Elektrolyseurvolumens ermittelt wird. Dabei wird die zeitliche Änderung eines Flüssigkeitsvolumens der Ausgangsflüssigkeit in dem Behältervolumen eines Elektrolyseurvolumens beispielsweise ermittelt, indem eine Füllstandshöhe von Ausgangsflüssigkeit in dem Behältervolumen wiederholt erfasst und ausgewertet wird, und/oder indem ein Gasdruck in dem Behältervolumen wiederholt erfasst und ausgewertet wird, und/oder indem eine zeitliche Änderung einer Druckdifferenz zwischen Gasdrücken in den beiden Behältervolumina erfasst und ausgewertet wird.

Die vorgenannten Ausgestaltungen der Erfindung nutzen vorteilhaft aus, dass ein Flüssigkeitsvolumen der Ausgangsflüssigkeit in einem Abscheidebehälter besonders einfach und präzise durch eine Erfassung einer Füllstandshöhe der Ausgangsflüssigkeit und/oder einem Gasdruck in dem Abscheidebehälter und/oder eine Druckdifferenz zwischen Gasdrücken in den beiden Abscheidebehältern ermittelt werden kann.

Eine weitere Ausgestaltung der Erfindung sieht vor, dass während einer Elektrolyse eine Elektrolysestromstärke erfasst wird und eine Verhältniskenngröße, die proportional zu dem Quotienten aus dem ermittelten Flüssigkeitsmengenstrom und der erfassten Elektrolysestromstärke ist, gebildet und zur Beurteilung der Membrandichtheit verwendet wird.

Diese Ausgestaltung der Erfindung nutzt aus, dass in der Regel das Verhältnis der Mengen eines Produktgases und der Ausgangsflüssigkeit, die eine Membran durchdringen, in guter Näherung konstant ist. Im Falle einer Leckage einer Membran entsteht ein zusätzlicher Transportweg für die Ausgangsflüssigkeit durch die Membran, wodurch dieses Verhältnis geändert wird. Daher eignet sich dieses Verhältnis als eine Kenngröße zur Beurteilung der Membrandichtheit. Dabei ist der Elektrolysestromstärke eine einfach zugängliche Messgröße, die ein Maß für die Menge eines die Membran durchdringenden Produktgases ist. Daher eignet sich eine Verhältniskenngröße, die proportional zu dem Quotienten aus dem ermittelten Flüssigkeitsmengenstrom und der erfassten Elektrolysestromstärke ist, besonders vorteilhaft zur Beurteilung der Membrandichtheit.

Weitergestaltungen der vorgenannten Ausgestaltung der Erfindung sehen vor, dass ein erster Verhältnisschwellenwert für die Verhältniskenngröße vorgegeben wird und auf eine Leckage wenigstens einer Membran geschlossen wird, wenn die Verhältniskenngröße den vorgegebenen ersten Verhältnisschwellenwert überschreitet, und/oder dass ein zweiter Verhältnisschwellenwert für die Verhältniskenngröße vorgegeben wird und auf eine Leckage wenigstens einer Membran geschlossen wird, wenn die Verhältniskenngröße den vorgegebenen zweiten Verhältnisschwellenwert unterschreitet.

Diese Weitergestaltungen der Erfindung definieren einfach überprüfbare Kriterien zur Detektion einer Leckage wenigstens einer Membran, die sich außerdem als überraschend zuverlässig erwiesen haben. Insbesondere definiert eine Vorgabe beider Verhältnisschwellenwerte einen Toleranzbereich für Werte der Verhältniskenngröße, außerhalb dessen auf eine Leckage einer Membran geschlossen wird. Dadurch wird vorteilhaft berücksichtigt, dass Ausgangsflüssigkeit eine Leckage einer Membran sowohl in derselben Richtung, in der auch ein Produktgas die Membran durchdringt, als auch in dazu entgegengesetzter Richtung passieren kann, wobei die Richtung von der relativen Höhe der Drücke in den beiden Elektrolyseurvolumina abhängt.

Eine weitere Ausgestaltung der Erfindung sieht vor, dass die Elektrolyse für eine Unterbrechungsdauer unterbrochen wird, die Elektrolyseurvolumina mit voneinander verschiedenen Flüssigkeitsmengen der Ausgangsflüssigkeit befüllt werden und anhand eines während der Unterbrechungsdauer ermittelten Flüssigkeitsmengenstroms ein Zeitbedarf für ein Angleichen der Flüssigkeitsmengen in den beiden Elektrolyseurvolumina bestimmt und zur Beurteilung der Membrandichtheit verwendet wird.

Diese Ausgestaltung der Erfindung definiert eine Testprozedur zur Beurteilung der Membrandichtheit, die während einer Unterbrechung der Elektrolyse durchgeführt wird. Dabei ist lediglich erforderlich, einen Zeitbedarf für ein Angleichen anfänglich unterschiedlicher Flüssigkeitsmengen der Ausgangsflüssigkeit in den Elektrolyseurvolumina zu ermitteln und auszuwerten. Nachteilig ist jedoch, dass der Elektrolyseur während der Testprozedur nicht für den Elektrolysebetrieb zur Verfügung steht.

Vorzugsweise werden dabei vor der Bestimmung des Zeitbedarfs für ein Angleichen der beiden Flüssigkeitsmengen Gasdrücke in den beiden Elektrolyseurvolumina einander, und beispielsweise einem Umgebungsdruck in einer Umgebung des Elektrolyseurs, angeglichen.

Ein Angleichen der Gasdrücke in den beiden Elektrolyseurvolumina definiert vorteilhaft einheitliche Bedingungen für die Testprozedur und vereinfacht dadurch die Auswertung der Testprozedur zur Beurteilung der Membrandichtheit. Eine Angleichung der Gasdrücke in den beiden Elektrolyseurvolumina an den Umgebungsdruck in einer Umgebung des Elektrolyseurs lässt sich besonders einfach, beispielsweise durch ein kontrolliertes Öffnen von Abblaseleitungen des Elektrolyseurs, realisieren.

Bei der vorgenannten Testprozedur wird ferner beispielsweise der Flüssigkeitsmengenstrom während der Unterbrechungsdauer wiederholt ermittelt und der Zeitbedarf für ein Angleichen der beiden Flüssigkeitsmengen wird anhand einer Extrapolation der erfassten Flüssigkeitsmengenströme bestimmt.

Dies kann die Testprozedur vorteilhaft verkürzen, da die Testprozedur nicht bis zum Erreichen des Angleichens der beiden Flüssigkeitsmengen fortgesetzt zu werden braucht.

Eine erfindungsgemäße Prüfvorrichtung zur Überprüfung einer Membrandichtheit wenigstens einer Membran eines Elektrolyseurs, der zwei durch die wenigstens eine Membran voneinander getrennte Elektrolyseurvolumina aufweist und zur Erzeugung zweier Produktgase aus einer Ausgangsflüssigkeit mittels einer Elektrolyse ausgebildet ist, umfasst eine Messvorrichtung zur Erfassung einer Flüssigkeitsmenge der Ausgangsflüssigkeit in wenigstens einem der beiden Elektrolyseurvolumina und eine Auswerteeinheit zur Ermittlung eines Flüssigkeitsmengenstroms der Ausgangsflüssigkeit zwischen den beiden Elektrolyseurvolumina anhand der von der Messvorrichtung erfassten Messwerte. Eine Ausgestaltung der Prüfvorrichtung sieht einen Strommesser zur Erfassung einer Elektrolysestromstärke des Elektrolyseurs vor. Weitere Ausgestaltungen der Prüfvorrichtung sehen vor, dass die Messvorrichtung wenigstens einen Füllstandssensor zur Erfassung eines Füllstands der Ausgangsflüssigkeit in einem Behältervolumen und/oder wenigstens einen Drucksensor zur Erfassung eines Gasdrucks in einem Behältervolumen umfasst.

Derartige Prüfvorrichtungen ermöglichen die Durchführung des erfindungsgemäßen Verfahrens zur Überprüfung einer Membrandichtheit mit den oben bereits genannten Vorteilen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1    ein Blockdiagramm eines Elektrolyseurs und einer Vorrichtung zur Überprüfung einer Membrandichtheit des Elektrolyseurs, und

FIG 2    ein Diagramm einen zeitlichen Verlaufs einer Verhältniskenngröße.

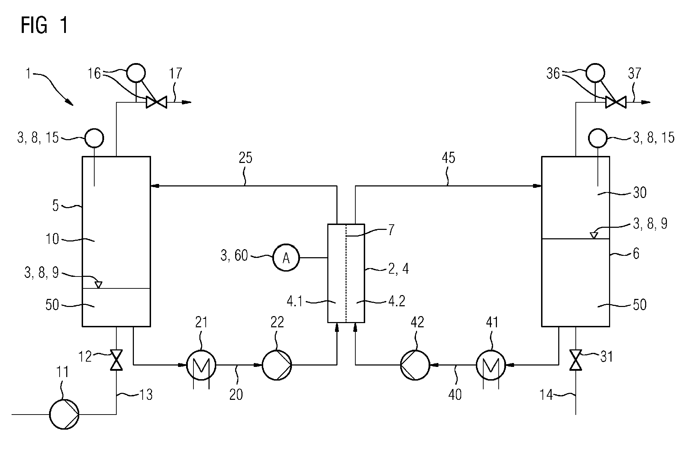

Figur 1 zeigt ein Blockdiagramm eines Elektrolyseurs 1 und einer Prüfvorrichtung 3 zur Überprüfung einer Membrandichtheit wenigstens einer Membran 7 des Elektrolyseurs 1.

Der Elektrolyseur 1 ist zur Erzeugung zweier Produktgase 10, 30 aus einer Ausgangsflüssigkeit 50 mittels einer Elektrolyse ausgebildet. Die Ausgangsflüssigkeit 50 ist beispielsweise Wasser, in welchem Fall bei der Elektrolyse als ein erstes Produktgas 10 Sauerstoff und als zweites Produktgas 30 Wasserstoff erzeugt werden.

Der Elektrolyseur 1 umfasst einen Zellblock 2 mit wenigstens einer Elektrolysezelle 4 und zwei Abscheidebehälter 5, 6. In Figur 1 ist nur eine Elektrolysezelle 4 dargestellt. Im Folgenden wird aber davon ausgegangen, dass der Zellblock 2 mehrere Elektrolysezellen 4 umfasst. Jede Elektrolysezelle 4 weist eine Membran 7 auf, die die Elektrolysezelle 4 in eine erste Teilzelle 4.1 und eine zweite Teilzelle 4.2 teilt. Jede erste Teilzelle 4.1 weist eine Anode für die Elektrolyse auf, jede zweite Teilzelle 4.2 weist eine Kathode für die Elektrolyse auf. Jede Membran 4 ist zur Trennung der bei der Elektrolyse in der jeweiligen Elektrolysezelle 4 erzeugten Produktgase 10, 30 ausgebildet.

Die ersten Teilzellen 4.1 sind über eine erste Vorlaufleitung 20 und eine erste Rücklaufleitung 25 mit einem ersten Abscheidebehälter 5 verbunden, in dem das bei der Elektrolyse in den Elektrolysezellen 4 erzeugte erste Produktgas 10 und Ausgangsflüssigkeit 50 gesammelt werden. In der ersten Vorlaufleitung 20 befinden sich ein erster Wärmetauscher 21 zur Temperierung von Ausgangsflüssigkeit 50 und eine erste Vorlaufpumpe 22, mittels derer Ausgangsflüssigkeit 50 von dem ersten Abscheidebehälter 5 durch die erste Vorlaufleitung 20 in die ersten Teilzellen 4.1 gepumpt wird. Die erste Rücklaufleitung 25 dient zur Leitung des bei der Elektrolyse in den Elektrolysezellen 4 erzeugten ersten Produktgases 10 in den ersten Abscheidebehälter 5. Die ersten Teilzellen 4.1, ein Behältervolumen des ersten Abscheidebehälters 5 sowie die erste Vorlaufleitung 20 und die erste Rücklaufleitung 25 bilden ein erstes Elektrolyseurvolumen des Elektrolyseurs 1. Dem ersten Abscheidebehälter 5 ist über eine Speiseleitung 13 Ausgangsflüssigkeit 50 zuführbar. Dazu befinden sich in der Speiseleitung 13 eine Speisepumpe 11 und ein Magnetventil 12, mittels dessen die Speiseleitung 13 geöffnet und verschlossen werden kann. Aus dem ersten Abscheidebehälter 5 ist über eine erste Ausgangsleitung 17 erstes Produktgas 10 abführbar. In der ersten Ausgangsleitung 17 befindet sich ein erstes Druckregelventil 16 zur Regelung eines Gasdrucks des ersten Produktgases 10.

Die zweiten Teilzellen 4.2 sind über eine zweite Vorlaufleitung 40 und eine zweite Rücklaufleitung 45 mit dem zweiten Abscheidebehälter 6 verbunden, in dem das bei der Elektrolyse in den Elektrolysezellen 4 erzeugte zweite Produktgas 30 und Ausgangsflüssigkeit 50 gesammelt werden. In der zweiten Vorlaufleitung 40 befinden sich ein zweiter Wärmetauscher 41 zur Temperierung von Ausgangsflüssigkeit 50 und eine zweite Vorlaufpumpe 42, mittels derer Ausgangsflüssigkeit 50 von dem zweiten Abscheidebehälter 6 durch die zweite Vorlaufleitung 40 in die zweiten Teilzellen 4.2 gepumpt wird. Die zweite Rücklaufleitung 45 dient zur Leitung des bei der Elektrolyse in den Elektrolysezellen 4 erzeugten zweiten Produktgases 30 in den zweiten Abscheidebehälter 6. Die zweiten Teilzellen 4.2, ein Behältervolumen des zweiten Abscheidebehälters 6 sowie die zweite Vorlaufleitung 40 und die zweite Rücklaufleitung 45 bilden ein zweites Elektrolyseurvolumen des Elektrolyseurs 1. Aus dem zweiten Abscheidebehälter 6 ist über eine Ablassleitung 14 Ausgangsflüssigkeit 50 ablassbar. Dazu befinden sich in der Ablassleitung 14 eine Ablassventil 31, mittels dessen die Ablassleitung 14 geöffnet und verschlossen werden kann. Aus dem zweiten Abscheidebehälter 6 ist über eine zweite Ausgangsleitung 37 zweites Produktgas 30 abführbar. In der zweiten Ausgangsleitung 37 befindet sich ein zweites Druckregelventil 36 zur Regelung eines Gasdrucks des zweiten Produktgases 30.

Das in Figur 1 dargestellte Ausführungsbeispiel der Prüfvorrichtung 3 umfasst eine Messvorrichtung 8 zur Erfassung einer Flüssigkeitsmenge der Ausgangsflüssigkeit 50 in jedem der beiden Elektrolyseurvolumina sowie eine nicht dargestellte Auswerteeinheit zur Ermittlung des Flüssigkeitsmengenstroms der Ausgangsflüssigkeit 50 zwischen den beiden Elektrolyseurvolumina anhand der von der Messvorrichtung 8 erfassten Messwerte. Die Messvorrichtung 8 umfasst für jeden Abscheidebehälter 5, 6 einen Füllstandssensor 9 zur Erfassung eines Füllstands der Ausgangsflüssigkeit 50 in dem Behältervolumen des jeweiligen Abscheidebehälters 5, 6 und/oder einen Drucksensor 15 zur Erfassung eines Gasdrucks in dem Behältervolumen des jeweiligen Abscheidebehälters 5, 6. In dem in Figur 1 dargestellten Ausführungsbeispiel umfasst die Messvorrichtung 8 für jeden Abscheidebehälter 5, 6 sowohl einen Füllstandssensor 9 als auch einen Drucksensor 15. In einfacheren Ausführungsbeispielen umfasst die Messvorrichtung 8 für jeden oder nur für einen der Abscheidebehälter 5, 6 entweder einen Füllstandssensor 9 oder einen Drucksensor 15.

Gemäß einem ersten Ausführungsbeispiel eines Verfahrens zur Überprüfung der Membrandichtheit des Elektrolyseurs 1 wird die Elektrolyse für eine Unterbrechungsdauer unterbrochen und während der Unterbrechungsdauer wird eine Testprozedur zur Überprüfung der Membrandichtheit durchgeführt.

Für die Testprozedur werden die beiden Elektrolyseurvolumina zunächst mit definierten, voneinander verschiedenen Flüssigkeitsmengen der Ausgangsflüssigkeit 50 befüllt. Dazu wird einer der beiden Abscheidebehälter 5, 6 bis zu einem vorgegebenen ersten Füllstand mit Ausgangsflüssigkeit 50 befüllt und der andere Abscheidebehälter 5, 6 wird bis zu einem vorgegebenen, von dem ersten Füllstand verschiedenen zweiten Füllstand mit Ausgangsflüssigkeit 50 befüllt.

Vorzugsweise werden ferner die Gasdrücke in den beiden Abscheidebehältern 5, 6 einander angeglichen. Beispielsweise werden dazu die Gasdrücke in den beiden Elektrolyseurvolumina einem Umgebungsdruck in einer Umgebung des Elektrolyseurs 1 angeglichen.

Anschließend wird ein Zeitbedarf für ein Angleichen der Flüssigkeitsmengen in den beiden Elektrolyseurvolumina anhand eines ermittelten Flüssigkeitsmengenstroms zwischen den beiden Elektrolyseurvolumina bestimmt. Dazu wird wiederholt mittels der Messvorrichtung 8 eine Differenz zwischen den Füllständen der Ausgangsflüssigkeit 50 und/oder zwischen den Gasdrücken in den beiden Abscheidebehälter 5, 6 ermittelt und ausgewertet. Der Zeitbedarf für ein Angleichen der Flüssigkeitsmengen in den beiden Elektrolyseurvolumina wird beispielsweise entweder direkt gemessen, indem eine Zeit bis zum Verschwinden des Flüssigkeitsmengenstroms oder bis zum Erreichen einer vorgegebenen Flüssigkeitsmengendifferenz zwischen den Flüssigkeitsmengen oder einer vorgegebenen Gasdruckdifferenz zwischen den Gasdrücken in den Abscheidebehältern 5, 6 erfasst wird, oder indem der Zeitbedarf für ein Angleichen der beiden Flüssigkeitsmengen anhand einer Extrapolation der erfassten Flüssigkeitsmengenströme bestimmt wird.

Alternativ kann ein mathematisches Modell für einen zeitlichen Verlauf des Angleichens der Flüssigkeitsmengen zur Ermittlung des Zeitbedarfs verwendet werden. Für den Fall, dass die Flüssigkeitsfüllstände in den Abscheidebehältern 5, 6 linear mit den Flüssigkeitsmengen korrelieren, wie es für gängige Formen von Abscheidebehältern 5, 6 der Fall ist, wird beispielsweise vorausgesetzt, dass die Füllstandsdifferenz $\Delta h$ zwischen den Flüssigkeitsfüllständen in den Abscheidebehältern 5, 6 exponentiell mit der Zeit t gemäß $\Delta h(t) = h_0 \cdot \exp(-kt)$ abnimmt, wobei k eine Konstante ist, die ein Maß für den Zeitbedarf für ein Angleichen der Flüssigkeitsfüllstände in den beiden Abscheidebehältern 5, 6 ist. Eine Auswertung der Logarithmuswerte $\ln(\Delta h)$ der Messwerte für die Füllstandsdifferenz $\Delta h$ in Abhängigkeit von der Zeit t erlaubt eine näherungsweise Bestimmung der Konstante k aus der Steigung einer durch diese Logarithmuswerte gelegten Gerade.

Auf eine Leckage wenigstens einer Membran 7 wird beispielsweise geschlossen, wenn der bei der Testprozedur ermittelte Zeitbedarf für ein Angleichen der Flüssigkeitsmengen in den beiden Elektrolyseurvolumina kleiner als ein vorgegebener Zeitbedarfsschwellenwert ist.

Die beschriebene Testprozedur kann auch zweimal hintereinander ausgeführt werden, wobei die Rollen der Abscheidebehälter 5, 6 vertauscht werden, so dass bei einer ersten Durchführung der Testprozedur beispielsweise der erste Abscheidebehälter 5 mit einer größeren Flüssigkeitsmenge der Ausgangsflüssigkeit 50 als der zweite Abscheidebehälter 6 befüllt wird, während bei der zweiten Durchführung der Testprozedur der zweite Abscheidebehälter 6 mit einer größeren Flüssigkeitsmenge der Ausgangsflüssigkeit 50 als der erste Abscheidebehälter 5 befüllt wird. Dadurch kann die Zuverlässigkeit der Überprüfung der Membrandichtheit vorteilhaft erhöht werden, da systematische Störeffekte erkannt werden können.

Alternativ oder zusätzlich wird die Membrandichtheit des Elektrolyseurs 1 während dessen Betriebes, d. h. während einer Elektrolyse überprüft. Dazu umfasst die Prüfvorrichtung 3 zusätzlich einen Strommesser 60 zur Erfassung einer Elektrolysestromstärke des Elektrolyseurs 1. Während einer Elektrolyse wird mittels des Strommessers 60 eine Elektrolysestromstärke erfasst und mittels der Messvorrichtung 8 ein Flüssigkeitsmengenstrom der Ausgangsflüssigkeit 50 zwischen den beiden Elektrolyseurvolumina ermittelt. Der Flüssigkeitsmengenstrom wird dabei beispielsweise ermittelt, indem die zeitliche Änderung eines Flüssigkeitsvolumens der Ausgangsflüssigkeit 50 in wenigstens einem der beiden Elektrolyseurvolumina ermittelt wird. Dazu wird beispielsweise eine zeitliche Änderung eines Flüssigkeitsvolumens der Ausgangsflüssigkeit in dem Behältervolumen des Abscheidebehälters 5, 6 des jeweiligen Elektrolyseurvolumens ermittelt, indem ein Füllstand von Ausgangsflüssigkeit 50 in dem Behältervolumen wiederholt erfasst und ausgewertet wird.

Aus dem ermittelten Flüssigkeitsmengenstrom und der erfassten Elektrolysestromstärke wird eine Verhältniskenngröße Q gebildet, die proportional zu dem Quotienten aus dem ermittelten Flüssigkeitsmengenstrom und der erfassten Elektrolysestromstärke ist. Die Verhältniskenngröße Q wird zur Beurteilung der Membrandichtheit verwendet. Dazu werden ein erster Verhältnisschwellenwert $Q_{S1}$ und ein zweiter Verhältnisschwellenwert $Q_{S2}$ für die Verhältniskenngröße Q vorgegeben und es wird auf eine Leckage wenigstens einer Membran 7 geschlossen, wenn die Verhältniskenngröße Q den vorgegebenen ersten Verhältnisschwellenwert Q1 überschreitet oder den zweiten Verhältnisschwellenwert $Q_{S2}$ unterschreitet.

Dieser Bildung und Auswertung der Verhältniskenngröße Q liegt die Idee zugrunde, dass insbesondere bei Verwendung von Wasser als Ausgangsflüssigkeit 50 mit jedem Molekül Wasserstoff auch wenige Moleküle Wasser, die nicht an der Elektrolysereaktion beteiligt sind, durch eine Membran 7 gelangen. Hierbei ist das Verhältnis dieser beiden Stoffströme in guter Näherung konstant. Sollte eine Leckage einer Membran 7 eintreten, entsteht ein zusätzlicher Transportweg, wodurch dieses Verhältnis gestört wird. Der Wassermengenstrom wird anhand der zeitlichen Änderung des Füllstands des Wassers im zweiten Abscheidebehälter 6 quantifiziert. Der Wassermengenstrom ergibt sich zu

$$dn_w/dt = c_w \cdot A \cdot dh/dt. \qquad\qquad [1]$$

In Gleichung [1] stehen $n_w$ für die Wassermenge im zweiten Abscheidebehälter 6, $c_w$ für die Stoffmengenkonzentration des Wassers, A für die Querschnittsfläche des zweiten Abscheidebehälters 6 und h für den Füllstand von Wasser im zweiten Abscheidebehälter 6. Als Zahlenwert für $c_w$ kann z.B. 55,5 mol/l verwendet werden, wobei in diesem Fall Temperatureffekte und gegebenenfalls vorliegende Gasblasen vernachlässigt werden. Überraschenderweise hat sich gezeigt, dass solche relativ groben Näherungen trotzdem zu einer zuverlässigen Methode führen. Die zeitliche Änderung des Füllstands wird zweckmäßigerweise mit Hilfe einer linearen Regression der zeitlich diskreten Füllstandswerte berechnet. Beispielsweise können jeweils 10 Werte, die in einem zeitlichen Abstand von je 5 Sekunden erfasst werden, herangezogen werden.

Der Wasserstoffstrom durch die Membranen 7 wird mit Hilfe der Faradayschen Gesetze berechnet. Hierbei werden die Anzahl der aktiven Elektrolysezellen 4 des Zellblocks 2 und die Elektrolysestromstärke berücksichtigt. Weiterhin wird eine Stromausbeute von 100 % angenommen. Der Wasserstoffstrom ergibt sich zu

$$dn_{H2}/dt = a \cdot I/(2 \cdot F). \qquad\qquad [2]$$

In Gleichung [2] stehen $n_{H2}$ für die erzeugte Wasserstoffmenge, a für die Anzahl aktiver Elektrolysezellen 4 des Zellblocks 2, I für die Elektrolysestromstärke und F für die Faraday-Konstante.

Das Verhältnis des Wassermengenstroms gemäß Gleichung [1] und des Wasserstoffstroms gemäß Gleichung [2] ist somit proportional zu dem Quotienten (dh/dt)/I und somit zu der Verhältniskenngröße Q.

In der obigen Betrachtung wird das Verhältnis der Stoffströme mittels der Gleichungen [1] und [2] berechnet. Wegen dabei verwendeter Näherungen können die tatsächlichen Werte von den gemäß den Gleichungen [1] und [2] berechneten Werten geringfügig abweichen. Bei intakten Membranen 7 nimmt das Verhältnis des Wassermengenstroms zu dem Wasserstoffstrom typischerweise einen einstelligen Zahlenwert an, so dass als obere Grenze, ab welcher eine Membran 7 als defekt gilt, beispielsweise der Zahlenwert 10 gesetzt werden kann. Prinzipiell brauchen jedoch für die Definition der Verhältniskenngröße Q und der Verhältnisschwellenwerte $Q_{S1}$, $Q_{S2}$ konstante Faktoren, wie z.B. die Querschnittfläche A des zweiten Abscheidebehälters 6 oder die Anzahl a aktiver Elektrolysezellen 4, nicht berücksichtigt zu werden, so dass der reine Zahlenwert (und die Einheit) der Verhältnisschwellenwerte $Q_{S1}$, $Q_{S2}$ entsprechend angepasst werden können.

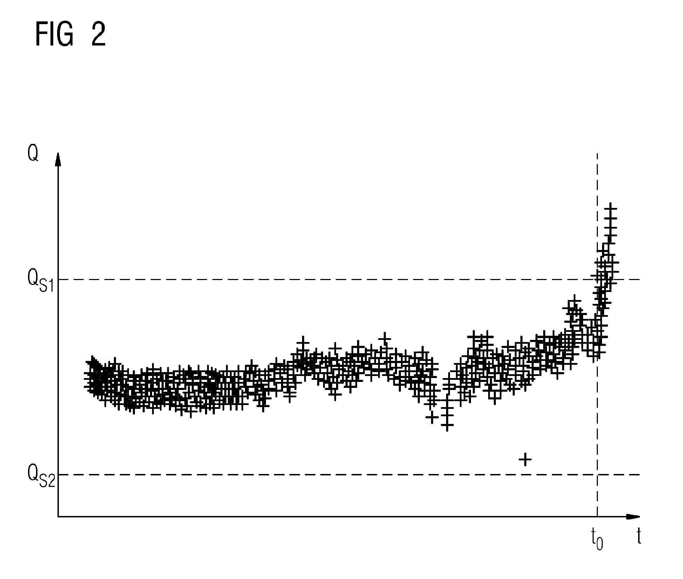

Figur 2 zeigt ein Diagramm eines Verlaufs einer derartigen Verhältniskenngröße Q in Abhängigkeit von der Zeit t, wobei ermittelte Werte der Verhältniskenngröße Q als Kreuze dargestellt sind. Bei einer Überschreitungszeit $t_0$ überschreitet die Verhältniskenngröße Q den ersten Verhältnisschwellenwert $Q_{S1}$. Daraus wird geschlossen, dass wenigstens eine Membran 7 zur Überschreitungszeit $t_0$ eine Leckage aufweist. Entsprechend wird auf eine Leckage wenigstens einer Membran 7 geschlossen, wenn die Verhältniskenngröße Q den zweiten Verhältnisschwellenwert $Q_{S2}$ unterschreitet. Die zeitlichen Schwankungen der Verhältniskenngröße Q gehen auf Schwankungen der Elektrolysestromstärke, der Temperatur und des Systemdrucks zurück. Die Einflüsse dieser Schwankungen der Elektrolysestromstärke, der Temperatur und des Systemdrucks können durch eine Ersetzung der Verhältniskenngröße Q durch eine verfeinerte Kenngröße zwar reduziert werden, jedoch ist eine derartige Verfeinerung im Allgemeinen unnötig, da die Auswirkungen einer Leckage einer Membran 7 die Einflüsse von Schwankungen der Elektrolysestromstärke, der Temperatur und des Systemdrucks deutlich übertreffen.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

**1.** Verfahren zur Überprüfung einer Membrandichtheit wenigstens einer Membran (7) eines Elektrolyseurs (1), der zwei durch die wenigstens eine Membran (7) voneinander getrennte Elektrolyseurvolumina aufweist und zur Erzeugung zweier Produktgase (10, 30) aus einer Ausgangsflüssigkeit (50) mittels einer Elektrolyse ausgebildet ist, wobei

- ein Flüssigkeitsmengenstrom der Ausgangsflüssigkeit (50) zwischen den beiden Elektrolyseurvolumina ermittelt
- und zur Überprüfung der Membrandichtheit ausgewertet wird.

**2.** Verfahren nach Anspruch 1,
**dadurch gekennzeichnet, dass** zur Ermittlung des Flüssigkeitsmengenstroms eine zeitliche Änderung eines Flüssigkeitsvolumens der Ausgangsflüssigkeit (50) in wenigstens einem der beiden Elektrolyseurvolumina ermittelt wird.

**3.** Verfahren nach Anspruch 2, wobei jedes der beiden Elektrolyseurvolumina ein Behältervolumen eines Abscheidebehälters (5, 6), in dem ein Produktgas (10, 30) und Ausgangsflüssigkeit (50) gesammelt werden, umfasst,
**dadurch gekennzeichnet, dass** die zeitliche Änderung eines Flüssigkeitsvolumens der Ausgangsflüssigkeit (50) in wenigstens einem der beiden Elektrolyseurvolumina ermittelt wird, indem eine Füllstandshöhe von Ausgangsflüssigkeit (50) in dem Behältervolumen des Elektrolyseurvolumens wiederholt erfasst und ausgewertet wird.

**4.** Verfahren nach Anspruch 3,
**dadurch gekennzeichnet, dass** die zeitliche Änderung eines Flüssigkeitsvolumens der Ausgangsflüssigkeit (50) in wenigstens einem Behältervolumen eines Elektrolyseurvolumens ermittelt wird, indem ein Gasdruck in dem Behältervolumen wiederholt erfasst und ausgewertet wird.

**5.** Verfahren nach einem der vorhergehenden Ansprüche, wobei jedes der beiden Elektrolyseurvolumina ein Behältervolumen eines Abscheidebehälters (5, 6), in dem ein Produktgas (10, 30) und Ausgangsflüssigkeit (50) gesammelt werden, umfasst, **dadurch gekennzeichnet, dass** der Flüssigkeitsmengenstrom ermittelt wird, indem eine zeitliche Änderung einer Druckdifferenz zwischen Gasdrücken in den beiden Behältervolumina erfasst und ausgewertet wird.

**6.** Verfahren nach einem der vorhergehenden Ansprüche, **dadurch gekennzeichnet, dass** während einer Elektrolyse eine Elektrolysestromstärke erfasst wird und eine Verhältniskenngröße (Q), die proportional zu dem Quotienten aus dem ermittelten Flüssigkeitsmengenstrom und der erfassten Elektrolysestromstärke ist, gebildet und zur Beurteilung der Membrandichtheit verwendet wird.

**7.** Verfahren nach Anspruch 6,
**dadurch gekennzeichnet, dass** ein erster Verhältnisschwellenwert ($Q_{S1}$) für die Verhältniskenngröße vorgegeben wird und auf eine Leckage wenigstens einer Membran (7) geschlossen wird, wenn die Verhältniskenngröße (Q) den vorgegebenen ersten Verhältnisschwellenwert ($Q_{S1}$) überschreitet.

8. Verfahren nach Anspruch 6 oder 7,
**dadurch gekennzeichnet, dass** ein zweiter Verhältnisschwellenwert ($Q_{S2}$) für die Verhältniskenngröße vorgegeben wird und auf eine Leckage wenigstens einer Membran (7) geschlossen wird, wenn die Verhältniskenngröße (Q) den vorgegebenen zweiten Verhältnisschwellenwert ($Q_{S2}$) unterschreitet.

9. Verfahren nach einem der vorhergehenden Ansprüche,
**dadurch gekennzeichnet, dass** die Elektrolyse für eine Unterbrechungsdauer unterbrochen wird, die Elektrolyseurvolumina mit voneinander verschiedenen Flüssigkeitsmengen der Ausgangsflüssigkeit (50) befüllt werden und anhand eines während der Unterbrechungsdauer ermittelten Flüssigkeitsmengenstroms ein Zeitbedarf für ein Angleichen der Flüssigkeitsmengen in den beiden Elektrolyseurvolumina bestimmt und zur Beurteilung der Membrandichtheit verwendet wird.

10. Verfahren nach Anspruch 9,
**dadurch gekennzeichnet, dass** vor der Bestimmung des Zeitbedarfs für ein Angleichen der beiden Flüssigkeitsmengen Gasdrücke in den beiden Elektrolyseurvolumina einander angeglichen werden.

11. Verfahren nach Anspruch 9,
**dadurch gekennzeichnet, dass** vor der Bestimmung des Zeitbedarfs für ein Angleichen der beiden Flüssigkeitsmengen Gasdrücke in den beiden Elektrolyseurvolumina einem Umgebungsdruck in einer Umgebung des Elektrolyseurs (1) angeglichen werden.

12. Verfahren nach einem der Ansprüche 9 bis 11,
**dadurch gekennzeichnet, dass** der Flüssigkeitsmengenstrom während der Unterbrechungsdauer wiederholt ermittelt wird und der Zeitbedarf für ein Angleichen der beiden Flüssigkeitsmengen anhand einer Extrapolation der erfassten Flüssigkeitsmengenströme bestimmt wird.

13. Prüfvorrichtung (3) zur Überprüfung einer Membrandichtheit wenigstens einer Membran (7) eines Elektrolyseurs (1), der zwei durch die wenigstens eine Membran (7) voneinander getrennte Elektrolyseurvolumina aufweist und zur Erzeugung zweier Produktgase (10, 30) aus einer Ausgangsflüssigkeit (50) mittels einer Elektrolyse ausgebildet ist, die Prüfvorrichtung (3) umfassend

- eine Messvorrichtung (8) zur Erfassung einer Flüssigkeitsmenge der Ausgangsflüssigkeit (50) in wenigstens einem der beiden Elektrolyseurvolumina und
- eine Auswerteeinheit zur Ermittlung eines Flüssigkeitsmengenstroms der Ausgangsflüssigkeit (50) zwischen den beiden Elektrolyseurvolumina anhand der von der Messvorrichtung (8) erfassten Messwerte.

14. Prüfvorrichtung (3) nach Anspruch 13, **gekennzeichnet durch** einen Strommesser (60) zur Erfassung einer Elektrolysestromstärke des Elektrolyseurs (1).

15. Prüfvorrichtung (3) nach Anspruch 13 oder 14, wobei jedes der beiden Elektrolyseurvolumina ein Behältervolumen eines Abscheidebehälters (5, 6), in dem ein Produktgas (10, 30) und Ausgangsflüssigkeit (50) gesammelt werden, umfasst,
**dadurch gekennzeichnet, dass** die Messvorrichtung (8) wenigstens einen Füllstandssensor (9) zur Erfassung eines Füllstands der Ausgangsflüssigkeit (50) in einem Behältervolumen und/oder wenigstens einen Drucksensor (15) zur Erfassung eines Gasdrucks in einem Behältervolumen umfasst.

FIG 1

FIG 2

Europäisches
Patentamt

European
Patent Office

Office européen
des brevets

# EUROPÄISCHER RECHERCHENBERICHT

Nummer der Anmeldung

EP 15 15 1622

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 2006 138004 A (SASAKURA ENG CO LTD) 1. Juni 2006 (2006-06-01) | 1,2,6-8, 13,14 | INV. B01D65/10 |
| Y | * das ganze Dokument * | 3-5, 9-12,15 | C25B15/06 C25B1/12 |
| | ----- | | |
| X | EP 2 006 418 A2 (RECH 2000 INC [CA]) 24. Dezember 2008 (2008-12-24) * Absatz [0007] - Absatz [0008]; Ansprüche 1-6,10-12,21-22 * | 1,13 | |
| | ----- | | |
| X | JP 2010 121146 A (HITACHI SHIPBUILDING ENG CO) 3. Juni 2010 (2010-06-03) * Zusammenfassung * | 1,13 | |
| | ----- | | |
| Y | JP 2004 084042 A (FUJI ELECTRIC HOLDINGS) 18. März 2004 (2004-03-18) * das ganze Dokument * | 3-5, 9-12,15 | |
| | ----- | | |
| A | EP 1 473 386 A1 (MITSUBISHI CORP [JP]) 3. November 2004 (2004-11-03) * das ganze Dokument * | 1-15 | |
| | ----- | | RECHERCHIERTE SACHGEBIETE (IPC) |
| A | JP 2000 054175 A (MITSUBISHI HEAVY IND LTD) 22. Februar 2000 (2000-02-22) * Zusammenfassung * | 1-15 | B01D C25B |
| | ----- | | |

Der vorliegende Recherchenbericht wurde für alle Patentansprüche erstellt

| Recherchenort | Abschlußdatum der Recherche | Prüfer |
|---|---|---|
| München | 23. Juni 2015 | Marti, Pedro |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

   .....................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 15 1622

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-06-2015

| Im Recherchenbericht angeführtes Patentdokument | Datum der Veröffentlichung | Mitglied(er) der Patentfamilie | Datum der Veröffentlichung |
|---|---|---|---|
| JP 2006138004 A | 01-06-2006 | JP 4126501 B2<br>JP 2006138004 A | 30-07-2008<br>01-06-2006 |
| EP 2006418 A2 | 24-12-2008 | AT 542931 T<br>EP 2006418 A2<br>ES 2379405 T3<br>PL 2006418 T3<br>PT 2006418 E<br>US 2009014326 A1 | 15-02-2012<br>24-12-2008<br>25-04-2012<br>31-07-2012<br>23-04-2012<br>15-01-2009 |
| JP 2010121146 A | 03-06-2010 | KEINE | |
| JP 2004084042 A | 18-03-2004 | JP 3791477 B2<br>JP 2004084042 A | 28-06-2006<br>18-03-2004 |
| EP 1473386 A1 | 03-11-2004 | BR 0302900 A<br>CA 2446563 A1<br>CN 1514890 A<br>EP 1473386 A1<br>HK 1065570 A1<br>IS 7045 A<br>KR 20040080332 A<br>MX PA03010957 A<br>NO 20034366 A<br>TW I226909 B<br>US 2003141200 A1<br>US 2006157354 A1<br>WO 03064727 A1 | 06-07-2004<br>07-08-2003<br>21-07-2004<br>03-11-2004<br>18-10-2007<br>20-11-2003<br>18-09-2004<br>08-04-2005<br>28-11-2003<br>21-01-2005<br>31-07-2003<br>20-07-2006<br>07-08-2003 |
| JP 2000054175 A | 22-02-2000 | KEINE | |

EPO FORM P0461

Für nähere Einzelheiten zu diesem Anhang : siehe Amtsblatt des Europäischen Patentamts, Nr.12/82